(19) Europäisches Patentamt
European Patent Office
Office européen des brevets

(11) **EP 1 700 398 B1**

(12) **EUROPEAN PATENT SPECIFICATION**

(45) Date of publication and mention
of the grant of the patent:
**11.07.2007 Bulletin 2007/28**

(21) Application number: **03783025.4**

(22) Date of filing: **22.12.2003**

(51) Int Cl.:
*H04B 7/06* (2006.01) *H04B 7/08* (2006.01)

(86) International application number:
**PCT/SE2003/002072**

(87) International publication number:
**WO 2005/062497 (07.07.2005 Gazette 2005/27)**

(54) **A MEASUREMENT METHOD FOR SPATIAL SCHEDULING**

MESSVERFAHREN ZUR RÄUMLICHEN ABLAUFPLANUNG

PROCEDE DE MESURE D'ORDONNANCEMENT SPATIAL

(84) Designated Contracting States:
**AT BE BG CH CY CZ DE DK EE ES FI FR GB GR
HU IE IT LI LU MC NL PT RO SE SI SK TR**

(43) Date of publication of application:
**13.09.2006 Bulletin 2006/37**

(73) Proprietor: **TELEFONAKTIEBOLAGET LM
ERICSSON (publ)
164 83 Stockholm (SE)**

(72) Inventor: **ASTELY, David
S-112 39 STOCKHOLM (SE)**

(74) Representative: **Kühn, Friedrich Heinrich et al
Ericsson AB
Patent Unit Radio Networks
Torshamnsgatan 23
S-164 80 Stockholm (SE)**

(56) References cited:
**EP-A1- 1 063 790        WO-A2-03/041283
US-A- 5 515 378          US-A- 5 886 988**

• **HAIMOVICH A.M. ET AL.: 'A Sampling-Based
Approach to Wideband Interference
Cancellation' IEEE TRANSACTIONS ON
AEROSPACE AND ELECTRONIC SYSTEMS vol.
34, no. 1, January 1998, pages 2 - 12, XP002980942**

**Description**

**FIELD OF THE INVENTION**

The present invention relates to methods and arrangements in a network transmission unit comprising multiple transmit antennas and a mobile terminal for achieving an improved scheduling of mobile terminals in a communication network.

**BACKGROUND OF THE INVENTION**

Multiple antenna elements can be used to adapt the effective radiation pattern to channel and interference conditions. In its simplest form this implies to transmit a signal from all the antennas with antenna specific complex weights:

Classical beamforming techniques employ arrays with relatively closely spaced elements and apply phase shifts, which are functions of the direction to the terminal. Beamforming techniques typically require some degree of calibration and/or well-behaved propagation conditions so that it makes sense to consider only average correlations, or directions, and that the received signal correlations can be translated to the transmit frequency.

Closed loop transmit diversity is another example which use complex antenna specific weights that are chosen to match the channel. Typically, antenna arrangements with uncorrelated fading are used. In this case, feedback from the terminal is used to select transmit weights that match the instantaneous downlink channel. A terminal estimates the channels from the base station from each antenna and tests a predefined set of weight vectors to see which weight vector would match the channel best. The terminal then signals this back to the base station. Closed loop transmit diversity techniques are in principle applicable to a wide range of propagation scenarios and have comparatively low requirements on calibration.

Multiple transmit antennas with antenna specific weights offer the advantage that less power is required to meet a certain quality target. This depends partly on the fact that the energy is not spread uniformly over the coverage area of the cell, but that the transmit pattern is matched to the channel, either an average channel or an instantaneous channel. Another possibility is to transmit multiple parallel streams of data, wither to different users or to a single user with multiple receive antennas. This leads to a throughput multiplication and is commonly referred to as spatial division multiple access (SDMA) and multiple-input-multiple-output (MIMO) techniques respectively.

The US-patent US5886988 relates to channel assignment and call admission control for spatial division multiple access systems. The patent describes a downlink channel assignment method assigning a conventional channel to a new connection by estimating the downlink interference-plus-noise level from a subscriber report, spatial signature and weight vector, and computing a predicted downlink received signal level.

The US-patent US5515378 relates to a spatial division multiple access wireless communication system. Measurements from an array of receiving antennas at the base station are used to obtain the positions and velocities of the users. The location information can also be used to calculate appropriate spatial multiplexing and demultiplexing strategies.

When combining transmit diversity or beamforming antennas with advanced adaptive transmission concepts, e.g. fast channel dependent scheduling and link adaptation of a high power and high data rate channel, the interference experienced by different users changes at the same rate as the transmit weights are changed. In studies of high speed downlink packet access (HSDPA) in $3^{rd}$ generation communication systems, it has turned out that this can cause a severe mismatch between the measured channel quality and the quality, which is experienced during transmission. It might even suggest that performance with a fixed multibeam antenna or closed loop transmit diversity could be worse than performance with single antenna transmission if only one user at a time with different transmit weights/beams is scheduled. One way to solve this is to make sure that the generated interference always looks similar, despite the fact that different users are scheduled and different weights are used. One simple approach is to always transmit energy in "all directions" by means of scheduling.

**SUMMARY OF THE INVENTION**

When defining transport formats, in terms of complex weights, for spatial multiplexing communication systems it has been observed to be a disadvantage that the feedback information for channel measurements by mobile terminals in such systems is insufficient, in particular with regard to advanced transmission channel handling applying channel dependent link adaptation and fast scheduling of transmission resources.

Typically, such terminal measurements can only consider their own current transmission conditions but cannot predict, e.g., consequences when the base station changes said transport formats in the sense that the number of data streams and their associated complex transmit weights are changed. In addition to this, the terminals will only report the expected channel quality from a single link perspective, and given that the base station applies transport formats, in terms of complex transmit weights that the terminal regards to be most appropriate.

It is thus an object of the present invention to achieve a spatial multiplexing system comprising a method for increasing the flexibility for allocation of available transport resources.

The present invention starts from two basic ideas: The number of defined spatial transport formats and the formats themselves in terms of transmit weights and available transmit power in the spatial multiplexing system must not be fixed but rather be regarded as a variable parameter depending, inter alia, on traffic requirements and channel conditions of the mobile terminals and the cell area in addition to interference management conditions. Further, the efficiency of the resource allocation depends to a high degree on an adequate feedback on adapted transport formats to the base station.

Briefly, in a base station, or access point, comprising several transmitter antennas, the method according to the present invention defines an appropriate set of spatial transport formats. Each format can be represented by help of a set of weight vectors, one for a stream of interest and zero, one or more for other spatially multiplexed streams, in addition to powers of the streams. The set is provided to the mobile terminals that are associated to said base station. The access point may adapt the set of transport formats and change the values of the representing weight vectors and the associated powers. The set of transport formats may be adapted by varying the transport formats in terms of changing the weight vectors and powers. The allocated power can be changed to control intercell interference between different cells or because the access point has to share its total available power with other channels, e.g. at other frequency channels. Further, obtained knowledge about the downlink channel statistics of the served mobile terminals, e.g. by means of uplink measurements, relevant feedback information indicating quality measurements on the active transport formats or other terminal feedback of downlink channel statistics, can be applied to determine a set of weight vectors that better matches the downlink channels.

A mobile terminal applied for the method according to the present invention determines, in response to a received indication of a transport format set and with regard to the terminal capabilities, one predetermined quality measure for each transport format in the specified subset, e.g. the signal-to-noise and interference ratio, for all or a subset of the formats in the said format set. The terminal will also take into account the interference of other multiplexed streams if the transport format contains such streams. Said transport format set is updated by the access point with a comparatively "low" frequency whereas the mobile terminal performs measurements of the currently applied transport format set with a higher frequency, i.e. at the rate of the scheduling and link adaptation. The quality measure is provided as feedback information to the access point.

The access point will, based on the quality measurement reports determine which spatial transport format to use and may signal this at least to the terminals that are scheduled for transmission. The terminals will then know, which users are to receive data, with which transmit weights and the number of streams.

It is a first advantage of the present invention that transport resources in a spatial multiplexing system can be allocated in a more flexible and efficient way, allowing fast link adaptation and fast channel dependent scheduling in combination with feedback to select complex antenna weights.

It is another advantage of the present invention that resource allocation and total system throughput can be optimised from an access point of view, which can not necessarily be achieved by an optimisation on a per link basis that is performed separately by each terminal.

It is still another advantage of the present invention that the used weights of the transport format set are not fixed quantities but can be updated in order to better match the channel and interference conditions of the served mobile terminals.

It is thus yet another advantage of the present invention that the transmission to the instantaneous channel conditions can be adapted and that the predictability of channel quality can be enforced by means of careful variations of the total transmitted downlink powers. This means, that not only the transmit powers of the antenna are controlled but also the correlations between the signals transmitted from the different antennas, which are functions of the transmit powers of the streams and the complex weights used.

Other objects, advantages and novel features of the invention will become apparent from the following detailed description of the invention when considered in conjunction with the accompanying drawings and claims.

For a better understanding, reference is made to the following drawings and preferred embodiments of the invention.

**BRIEF DESCRIPTION OF THE DRAWINGS**

Figure 1 shows a part of a communication system within which the present invention can be applied.

Figure 2 shows the method steps according to the preferred embodiment of the present invention that are performed in a transmission network unit.

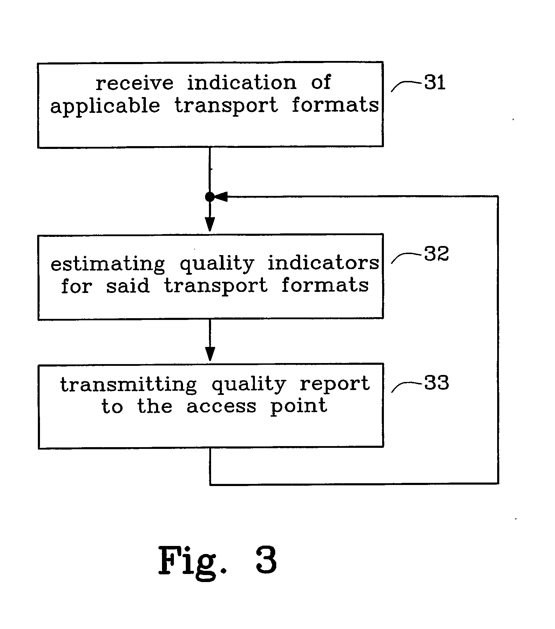

Figure 3 shows the method steps according to the present invention that are performed in a mobile terminal.

**DETAILED DESCRIPTION**

The present invention relates to methods and arrangements for efficiently providing communication services to a plurality of mobile terminals that are served by one or more radio base stations covering a certain geographical area. Said services are provided to the mobile terminals by means of transmitting data to the various mobile terminals with different antenna weights in order to achieve an optimised matching to varying downlink channel properties and, if possible, by means of exploiting differences of the channel characteristics to the various mobile terminals in order to be able to use spatial multiplexing for higher order transport formats.

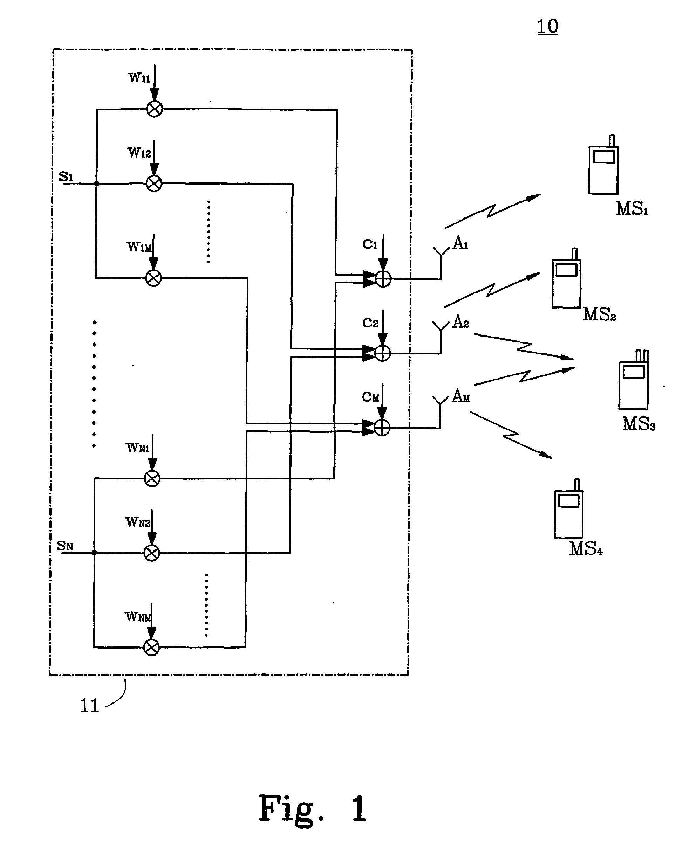

Figure 1 shows a simplified picture of a part of a communication system 10 within which the present invention can be applied. The radio base station is represented as an access point 11 comprising several antennas $A_1, A_2, ..., A_M$ for data transmission to one or a plurality of mobile terminals $MS_1, ..., MS_k$, each of which equipped with one or more antennas. The area, which can be served by said access point 11, is referred to as a cell. For the sake of simplicity, the following will consider the case with non-frequency selective channels. The basic principle of the present invention applies to a set of carriers in a multi-carrier system such as OFDM. Large bandwidths can be handled by splitting the total frequency band in a number of carrier blocks.

The access point transmits a number N of data streams $s_1, ..., s_N$ using M antennas $A_1, A_2, ..., A_M$ to at least some of the served mobile terminals $MS_1, ..., MS_k$. Typically the number N of data streams is less than or equal to the number M of antennas. Mobile terminals, e.g. $MS_2$, comprising multiple antennas and/or advanced receivers can receive several parallel streams. The downlink channel is made observable by means of adequate measurements, which can be deducted from transmitted antenna specific pilot signals $c_1, ..., c_M$, which are known to the mobile terminals. Such pilot signals can be used, e.g., to estimate the transmission characteristics of the channels between access point and mobile terminals and the noise and interference levels. Pilot signals can be known symbol sequences but it is also a conceivable alternative to apply a blind or semi-blind channel estimation with no or just a few pilot symbols to avoid or at least reduce the required overhead.

The present invention intends to adapt such a communication system to current traffic situations, to schedule mobile terminals, and to exploit channel and interference conditions. The parameters that can be varied for a data stream $s_i$ to achieve this adaptation are for each transmission path over the antennas $A_1, A_2, ..., A_M$ the vector of weights $w_i = (w_{i1}, ..., w_{iM})$ for the access point, the downlink power $P_i$ for said data stream $S_i$, and the data rate $R_i$, which can be applied for transmission of the data stream $S_i$ to a specific one of the mobile terminals. Each weight $w_{im}$ of said weight vector describes the transmission behaviour over the antenna $A_m$ and can be expressed for a certain data stream $s_i$ as a non-frequency selective filter with impulse response $w_{im} = \xi_{im} \cdot e^{j\varphi im} \cdot \delta(t - \tau_{im})$ comprising at least parameters denoting the amplitude $\xi_{im}$ and phase shift $\varphi_{im}$ of the antenna transmission, and optionally a parameter $\tau_{im}$ indicating a certain time delay value for transmitting data over said antenna $A_m$. Generally, the weighting of the data streams over the various antennas can be perceived as a digital filtering of said streams with a set of frequency selective filters, one for each antenna and stream.

Within the scope of the present invention the transmission of data streams from the radio base station must be seen with regard to outer conditions, which can relate to cell conditions, e.g. the geographical surface of said cell or possible influences on the cell shape due to neighbour cells, or which are related to traffic conditions, e.g. regarding the distribution of mobile terminals regarding their position in the cell or regarding the time of the day.

The access point, as denoted in figure 1, transmits downlink data streams to the mobile terminals possibly by means of a spatial multiplexing. It is thus a key feature of the present invention to determine an appropriate set of spatial transport formats and transmit said sets in an appropriate manner to the mobile stations. A transport format within the context of the present invention consists of one weight vector for the stream that is to be demodulated and zero, one, or more multiplexed co-channel streams, each of which also comprising an associated weight vector. Further, the transport format comprises power values, which are associated with the streams, both the stream that is to be demodulated and the co-channel streams. Each of said weight vectors consists of a number M of complex weights, given that we have M antennas, and, if appropriate, a certain delay value.

A second important feature of the method according to a preferred embodiment of the present invention is a feedback mechanism from the mobile terminals back to the access point to determine which transport format momentarily is regarded to be the best in terms of quality or supported bit rate. It is the intention of the present invention that the access point receives quality reports for several or all of the different transport formats in the set. Each spatial transport format is characterised by the number of streams and associated with each stream a vector of transmit weights and a transmission power. The sets of transmit weights are determined by the access point, which can take the properties of the antenna arrangement, the propagation conditions, the interference, and the traffic conditions into account. Initially, the access point can determine, e.g., a number of basic transport formats TFi, where i denotes the number of such a format, each having an assigned transmission power value $P_i$ and an initial weight vector $w_i=(w_{i1},...,w_{iM})$, where M denote the number of transmission ports, i.e. the number of antennas, of the access point. The weight vectors for each transport format can be interpreted as generating different transmission lobes. It is one important aspect of the present invention to make these weight vectors available to mobile terminals that are served by the access point. The access point signals the set of spatial transport formats, or a representation thereof, e.g. over the air, to the mobile terminals that shall be served. It would be another alternative to assume that the mobile terminals already possess a kind of code book of the transmit formats and that the access point submits indications of said formats. For the purpose of signalling the transport formats are appropriately quantised and encoded. This could be realised by means of parameterising a number of different transport formats and then signal the subset of said transport formats that should be considered. As conditions change the access point can signal updates of the set of currently active spatial transport formats to the mobile terminals, either on a dedicated channel or on broadcast channels. This signalling can be done on another physical channel using different resources in terms of time, frequency, and code. The rate of updates of the spatial transport formats is expected to be relatively slow in relation to the measurement rate. If a large set of transport formats is signalled or predefined, the updates, e.g. relative transmit powers or signalling of the subset of transport formats to be used, can be made simpler and more often.

The mobile terminals receive the pilot signals $c_1,...,c_M$, which the terminals use to estimate the downlink channels and an agreed quality indicator, e.g. a signal-to-noise and interference ratio (SNIR) or a supported bit rate in terms of a coding and modulation scheme, for each transport format when taking the channel into account. This is done by trying all spatial transport formats in the currently active set of the mobile terminal and derive a quality indicator for said formats such as, e.g., the above mentioned SNIR-value, which can be translated into a supported data rate in terms of modulation and channel coding scheme. By help of said measurements the terminals can report back to the access point feedback information for at least certain transport formats, either only the best or several transport formats that are regarded to be sufficiently good, together with a predefined quality indicator for said transport formats. In another conceivable alternative, the terminal could signal back the set of transport formats with the lowest quality indicator, e.g. represented in form of a SNIR-value, in addition to the best transport formats. This can be valuable if only single stream formats are used. From such measurements of single stream formats, the access point synthesize a multi-stream spatial transport format with controlled interference in which data streams are transmitted to another user on a spatial transport format which is received poorly by a certain user. This will be further elaborated in the third embodiment of the present invention. The feedback information can be used as an indication of the bit rate, at which the terminals are capable to receive data from the access point when applying said transport formats.

For instance, a mobile terminal can apply the signal-to-noise and interference ratio (SNIR) as a metric to determine the quality indicator for each of the transport formats in its active set. Said metric Q is then calculated as

$$Q = P\left|\underline{h}^H\,\underline{w}\right|^2 \Big/ \left(\underline{h}^H\,\underline{\underline{W}}\,\underline{P}\,\underline{\underline{W}}^H\,\underline{h} + N\right)$$

In this expression the numerator represents the stream of interest with assigned power value P while the denominator contains the contribution of interference from the streams according to the other transport formats and an estimate N of the noise. $\underline{h}$ represents the vector of the estimates of the downlink channel between access point and mobile terminal. $\underline{w}$ denotes the vector of weights for the stream of interest while $\underline{W}$ is the matrix of weight vectors of the co-channel streams. $\underline{P}$ is a diagonal matrix comprising the powers of the co-channel streams. If a more long-term measurement is required or in case of significant variations during the measurement period due to, e.g., the mobility of the terminals, the statistics of the channels and noise can be used instead. It would be another conceivable alternative that the access point instructs the terminals just to consider a subset of the current set of active spatial transport formats. The example above refers to the case when only one carrier is applied for transmission to a mobile terminal. In case of a multi-carrier scenario the mobile terminal can perform quality measurements for several carriers and derive one representing quality value by means of an appropriate algorithm, which is preferably implemented in the mobile terminal.

The access point can, based on the measurement reports from the terminals, decide which users to schedule and which spatial transport format to use. In addition, the access point determines which data rate to use in terms of modulation and channel coding scheme. This scheduling and link adaptation can be done to maximise, e.g., system throughput by selecting the users and the formats for which the sum of the supported rates is maximised. Further, quality of service constraints, such as delay requirements and minimum bit rates, can be accounted as well as fairness constraints. Coding and modulation schemes are then transmitted to the intended users and possibly also the chosen spatial transport format at least for the stream of interest. This signalling can be done over a control channel using another radio resource. Knowledge of the chosen spatial transport format makes it possible for the terminals to use the antenna specific pilots. Further, the terminals may then also know the number of co-channel interfering streams as well as their channels. The access point may also choose to change the transmit power of streams of a given transport format and also synthesize a multiple stream transport format despite the fact that the mobile terminals are not aware of such formats.

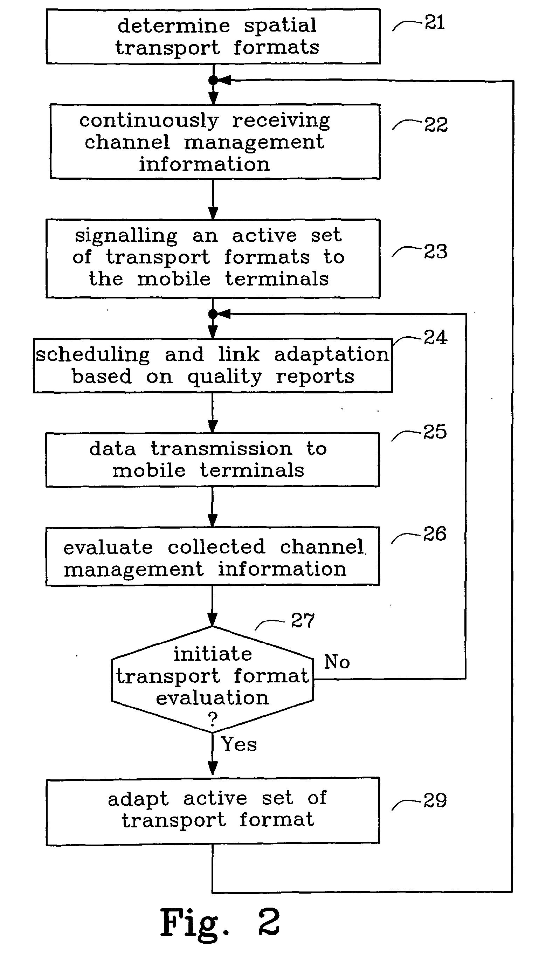

Figure 2 shows the method steps that are performed in the access point according to the preferred embodiment of present invention. The access point initially determines, block 21, the spatial transport formats, both the number and the properties of said formats as described above. From these transport formats an appropriate subset, which in the following is denoted the active set, is selected and signalled, block 23, to mobile terminals that are served by said access point. For this purpose the transport formats are appropriately quantised and encoded or, alternatively, the set of transport formats is parameterised in an efficient way then an indication of the selected active subset is signalled. The access point also determines- the periods of time during which the mobile terminals are supposed to perform measurements to determine a quality indicator of the downlink channel. The access point then performs a scheduling of the mobile terminals and a corresponding link adaptation, block 24, and applies the transport formats of the active set for data transmission to the mobile terminals, block 25. The access point will continuously receive and collect feedback information from the mobile terminals and other information, which is related to the management of the downlink channels for the active set of spatial transport formats, block 22. The feedback information from the mobile terminals is provided by means of a quality indicator as explained above. Said other information, which can relate to an interference management, can be provided, e.g., by neighbour cells or a superior network control unit to indicate requirements according to an intercell management that intends to optimise the transmission conditions for groups of cells. Yet another kind of collected information relates to measurements of the downlink channel statistics. The access point initiates at certain instances of time or in response to certain events an evaluation of the collected channel management information with regard to the active set of transport formats, block 26. From the collected information the access point can, e.g., adapt the active set of transport formats, block 29, and signal said adapted set again to the mobile terminals, block 23.

The following describes two embodiments of the present invention: In a first embodiment the access point comprises two antennas with uncorrelated fading and defines four transport formats $Tf_i$ (i=1...4) with a single stream transmission. Initially it is assumed that the transmit weight of the first antenna has a value 1 whereas the transmit weight of the second antenna is selected from a set of complex transmit weights, each having the absolute value 1 and phase shifted by a value of $\pi/2$. The weight vectors $\underline{w}_i$ that are assigned to each of these four transmit formats can thus be expressed as

$$\underline{w}_1 = \begin{bmatrix} 1 \\ e^{j\pi/4} \end{bmatrix} \quad , \quad \underline{w}_2 = \begin{bmatrix} 1 \\ e^{-j\pi/4} \end{bmatrix} \quad , \quad \underline{w}_3 = \begin{bmatrix} 1 \\ e^{-j3\pi/4} \end{bmatrix} \quad , \quad \underline{w}_4 = \begin{bmatrix} 1 \\ e^{j3\pi/4} \end{bmatrix}$$

In addition a set of four two stream transport formats can be defined where the co-channel stream is transmitted with an orthogonal weight vector. This leads to an additional number of transport formats, which are characterised by pairs of weight vectors:

$$\{\underline{w}_1, \underline{w}_3\} \quad , \quad \{\underline{w}_2, \underline{w}_4\} \quad , \quad \{\underline{w}_3, \underline{w}_1\} \quad , \quad \{\underline{w}_4, \underline{w}_2\}$$

Here, the first vector out of the set of two vectors is used to weight the signal of interest whereas the second weight vector refers to the weights of the co-channel stream. The access point can now determine whether the best performance is obtained by a transmission of one or two streams. However, care must be taken when changing the number of streams since this can affect the radiated intercell interference. If two streams are transmitted the access point can select the best combination. This allows the access point to select the combination of weights providing the best performance and thus maximising the throughput from a system point of view instead of a link point of view.

Another embodiment of the present invention relates to a fixed multibeam system or a set of antennas with different pointing directions. In this case, the transport format can comprise vectors with zeros and ones, whereby a non-zero value indicates that a certain antenna is used to transmit a stream. When considering the case with two fixed beams with different pointing directions, it is possible to determine two basic single stream formats

$$\underline{w}_1 = \begin{bmatrix} 0 \\ 1 \end{bmatrix} \quad , \quad \underline{w}_2 = \begin{bmatrix} 1 \\ 0 \end{bmatrix}$$

and to determine two dual stream formats

$$\{\underline{w}_1, \underline{w}_2\} \quad , \quad \{\underline{w}_2, \underline{w}_1\}$$

Based on the measurement reports, the access point can determine whether to transmit in one or two beams, which user to transmit to in each beam and with which data rate.

A third embodiment of the present invention assumes mobile terminals comprising a single antenna and assumes that only single stream transport formats are signalled and measured. It is further assumed that the transmit power of all defined transport formats is selected to be the same value $P_0$ and that the terminals report a signal-to-noise and interference ratio (SNIR). In this case the quality indicator for a transport format $TF_i$ is derived as

$$SNIR_i = \frac{P_0 |w_i^H \cdot h|^2}{N} \; .$$

$w_i$ is the weight vector associated with the transport format, $h$ denotes the channel estimate of the terminal, and $N$ denotes the noise level of the terminal. From this assumptions the access point is capable to construct and evaluate multistream formats. Assuming that such a format will transmit a data stream of power $P_n/P_0$ with transmit weight $w_n$ to users and supposing that the stream j is transmitted to one specific user of interest. The access point can then predict the SNIR for the stream j, which is transmitted to this user with a candidate multistream format:

$$SNIR_{pred,j} = \frac{P_j \cdot SNIR_j}{\left(1 + \sum_{n \neq j} P_n\right)}$$

Based on a number of such predictions the access point can deduce the supported data rate for different constructed multistream formats from the single stream measurements. In this way the access point can evaluate the supported rates for different transport formats with the streams sent to the different users and choose a combination of transport formats and users served such that, e.g., a user is served when the supported rate is as high as possible.

**Claims**

1.  A method in an access point (11) of a communication system (10), said access point (11) transmitting signals of data streams using a set of one or more antennas ($A_1,...,A_M$) to a plurality of mobile terminals ($MS_1,...,MS_k$),
    **characterised by**
    determining (21) a set of spatial transport formats comprising for each format at least one or more vectors of complex transmission weights and delays, each vector associated with the transmission of one of a determined signal of interest or one of a number of multiplexed co-channel signals and associated with a transmission power value of its associated signal, and whereby each vector element is associated with one antenna,

selecting a subset of said transport formats as the active set for data transmission to one or several of said mobile terminals,

signalling (23) said active set of transport formats to said one or several mobile terminals.

2. The method according to claim 1, whereby the norm of a vector represents the transmission power of the associated signal.

3. The method according to claim 1, whereby a scaling factor of a vector represents the transmission power of the associated signal.

4. The method according to one of claims 1-3, whereby the signalling (23) is performed over a common control channel that can be decoded by all users within the coverage area of the access point.

5. The method according to one of claims 1-3, whereby the signalling (23) is performed over a dedicated control channel which is transmitted over a part of the coverage area of the access point to a specific user.

6. The method according to one of the preceding claims, whereby the mobile terminals or groups of mobile terminals are assigned to different sets of transport formats.

7. The method according to one of the preceding claims comprising the step of advising the mobile terminals about a metric to be applied on selected downlink channel properties to derive a quality indicator for one or more of the transport formats.

8. The method according to claim 7 comprising the step of advising the mobile terminals to provide quality indicators for the best or a set of best transport formats with respect to the applied metric.

9. The method according to claim 7 or 8 comprising the step of advising the mobile terminals to provide quality indicators for the worst or a set of worst transport formats with respect to the applied metric.

10. The method according to claim 7, whereby the applied metric is a signal-to-noise and interference ratio.

11. The method according to claim 7, whereby the applied metric is an estimate of the supported bit rate in terms of a channel encoding and modulation scheme.

12. The method according to claim 1, whereby the number of weights for each antenna is the same.

13. The method according to claim 12, whereby only one complex weight and delay is assigned to each specific antenna.

14. The method according to claim 1, whereby one fixed delay value is assigned to all the antennas.

15. The method according to claim 14, whereby the fixed delay value is not included in the signalling of the active set of transport formats.

16. The method according to claim 1, whereby the access point further performs the steps of

adjusting transport formats of the active set by means of adapting (29) the parameters of their complex transmission weights and/or their transmission power by means of evaluating (26) collected channel management information (22),

signalling (23) an indication of the adjusted transport formats to the one or several mobile terminals.

17. The method according to claim 16, whereby said received management information (22) includes mobile terminal determined quality indicators of the downlink channels associated to said transport formats.

18. The method according to claim 16 or 17, whereby said received management information (22) includes interference management requirements and/or indications of downlink channel statistics.

19. The method according to claim 16, whereby the selecting and adjusting of said transport formats optimises the aggregate data throughput subject to quality and fairness requirements.

**20.** The method according to claim 1, whereby the access point further performs the steps of
evaluating (26) a plurality of quality indicators received from various mobile terminals and determining (24) the applicable data rates for each of the data streams associated to the transport formats in the active set,
determining (24) from said evaluation a scheduling scheme and scheduling data streams to said mobile terminals,
assigning an applicable data rate to each of said scheduled data streams.

**21.** The method according to claim 20, whereby said scheduling scheme provides a fair access to the data streams.

**22.** The method according to claim 20, whereby the said scheduling scheme provides cyclic access to the data streams.

**23.** The method according to claim 20, whereby the scheduling scheme only provides access to the data streams if the reported quality indicator is sufficiently good.

**24.** A method in a mobile terminal ($MS_1$,...,$MS_k$) of a communication system (10), said mobile terminal comprising one or more antennas ($A_1$,...,$A_M$) for receiving data streams from a multi-antenna access point (11),
**characterised by**
receiving (31) from the access point an indication of applicable spatial transport formats,
estimating (32) quality indicators for the received transport formats taking channel and interference conditions into account,
transmitting (33) a quality report for one or several of the received transport formats, including a quality indicator for each of said formats.

**25.** The method according to claim 24, whereby a mobile terminal determines a quality indicator from a signal-to noise and interference ratio when applying the received transport formats.

**Patentansprüche**

**1.** Verfahren in einem Zugangspunkt (11) eines Kommunikationssystems (10), wobei der Zugangspunkt (11) Signale von Datenströmen unter Verwendung einer Menge aus einer oder mehreren Antennen ($A_1$, .... $A_M$) an eine Vielzahl von mobilen Endgeräten ($MS_1$, ..., $MS_k$) überträgt, **gekennzeichnet durch**:

Bestimmen (21) einer Menge von Raumtransportformaten, die für jedes Format mindestens einen oder mehrere Vektoren aus komplexen Übertragungs-Wichtungsfaktoren und -Verzögerungen umfassen, wobei jedem Vektor die Übertragung entweder eines bestimmten Signals von Interesse oder eines aus einer Vielzahl von multiplexierten Gleichkanalsignalen zugeordnet ist und ein Übertragungsleistungswert seines zugeordneten Signal zugeordnet ist, und wonach jedem Vektorelement eine Antenne zugeordnet ist,
Auswählen einer Teilmenge der Transportformate als die aktive Menge für die Datenübertragung an eines oder mehrere der mobilen Endgeräte.
Signalisieren (23) der aktiven Menge von Transportformaten an das eine oder die mehreren mobilen Endgeräte.

**2.** Verfahren nach Anspruch 1, wonach die Norm eines Vektors die Übertragungsleistung des zugeordneten Signals darstellt.

**3.** Verfahren nach Anspruch 1, wonach ein Skalierungsfaktor eines Vektors die Übertragungsleistung des zugeordneten Signals darstellt.

**4.** Verfahren nach einem der Ansprüche 1 bis 3, wonach die Signalisierung (23) über einen gemeinsamen Steuerungskanal durchgeführt wird, der durch alle Benutzer innerhalb des Überdeckungsbereichs des Zugangspunkts decodiert werden kann.

**5.** Verfahren nach einem der Ansprüche 1 bis 3, wonach die Signalisierung (23) über einen festgeschalteten Steuerungskanal durchgeführt wird, der über einen Teil des Überdeckungsbereichs des Zugangspunkts an einen spezifischen Benutzer übertragen wird.

**6.** Verfahren nach einem der vorhergehenden Ansprüche, wonach den mobilen Endgeräten oder Gruppen von mobilen Endgeräten unterschiedliche Mengen von Transportformaten zugewiesen werden.

7. Verfahren nach einem der vorhergehenden Ansprüche, das den folgenden Schritt umfaßt: Benachrichtigen der mobilen Endgeräte über eine Metrik, die auf ausgewählte Abwärtsstreckenkanal-Eigenschaften anzuwenden ist, um eine Qualitätsangabe für eines oder mehrere der Transportformate abzuleiten.

8. Verfahren nach Anspruch 7, das den folgenden Schritt umfaßt: Benachrichtigen der mobilen Endgeräte, Qualitätsangaben für das beste oder eine Menge von besten Transportformaten in bezug auf die angewendete Metrik bereitzustellen.

9. Verfahren nach Anspruch 7 oder 8, das den folgenden Schritt umfaßt: Benachrichtigen der mobilen Endgeräte, Qualitätsangaben für das schlechteste oder eine Menge von schlechtesten Transportformaten in bezug auf die angewendete Metrik bereitzustellen.

10. Verfahren nach Anspruch 7, wonach die angewendete Metrik ein Signal-Rausch- und Signal-Störsignal-Verhältnis ist.

11. Verfahren nach Anspruch 7, wonach die angewendete Metrik ein Schätzwert der unterstützten Bitrate hinsichtlich eines Kanal-Codierungs- und -Modulationsprinzips ist.

12. Verfahren nach Anspruch 1, wonach die Anzahl der Wichtungsfaktoren für jede Antenne gleich ist.

13. Verfahren nach Anspruch 12, wonach jeder spezifischen Antenne nur ein komplexer Wichtungsfaktor und eine komplexe Verzögerung zugewiesen wird.

14. Verfahren nach Anspruch 1, wonach allen Antennen ein fester Verzögerungswert zugewiesen wird.

15. Verfahren nach Anspruch 14, wonach der feste Verzögerungswert nicht in die Signalisierung der aktiven Menge von Transportformaten einbezogen wird.

16. Verfahren nach Anspruch 1, wonach der Zugangspunkt ferner die folgenden Schritte durchführt:

   Regulieren von Transportformaten der aktiven Menge durch Anpassen (29) der Parameter ihrer komplexen Übertragungs-Wichtungsfaktoren und/oder ihrer Übertragungsleistung durch Bewerten (26) gesammelter Kanalverwaltungsinformation (22).
   Signalisieren (23) einer Angabe über die regulierten Transportformate an das eine oder die mehreren mobilen Endgeräte.

17. Verfahren nach Anspruch 16, wonach die empfangene Kanalverwaltungsinformation (22) durch mobile Endgcräte bestimmte Qualitätsangaben über die den Transportformaten zugeordneten Abwärtsstreckenkanäle aufweist.

18. Verfahren nach Anspruch 16 oder 17, wonach die empfangene Kanalverwaltungsinformation (22) Interferenzverwaltungsanforderungen und/oder Angaben über Abwärtsstreckenkanal-Statistiken einschließt.

19. Verfahren nach Anspruch 16 wonach das Auswählen und Regulieren der Transportformate den Summen-Datendurchsatz in Abhängigkeit von Qualitäts- und Gerechtigkeitsanforderungen optimiert.

20. Verfahren nach Anspruch 1, wonach der Zugangspunkt ferner die folgenden Schritte durchführt:

   Bewerten (26) einer Vielzahl von Qualitätsangaben, die von verschiedenen mobilen Endgeräten empfangen werden, und Bestimmen (24) der geeigneten Datenraten für jeden der Datenströme, die den Transportformaten in der aktiven Menge zugeordnet sind.
   anhand der Bewertung erfolgendes Bestimmen (24) eines Planungsprinzips und Planen von Datenströmen zu den mobilen Endgeräten,
   Zuweisen einer geeigneten Datenrate an jeden der geplanten Datenströme.

21. Verfahren nach Anspruch 20, wonach das Planungsprinzip einen gerechten Zugang zu den Datenströmen ermöglicht.

22. Verfahren nach Anspruch 20, wonach das Planungsprinzip einen zyklischen Zugang zu den Datenströmen ermöglicht.

**23.** Verfahren nach Anspruch 20, wonach das Planungsprinzip nur Zugang zu den Datenströmen ermöglicht, wenn die gemeldete Qualitätsangabe hinreichend gut ist.

**24.** Verfahren in einem mobilen Endgerät (MS$_1$, .... MS$_k$) eines Kommunikationssystems (10), wobei das mobile Endgerät eine oder mehrere Antennen (A$_1$, ..., A$_M$) zum Empfangen von Datenströmen von einem Mehrfachantennen-Zugangspunkt (11) umfaßt, **gekennzeichnet durch**:

> Empfangen (31) einer Angabe über geeignete Raumtransportformate vom Zugangspunkt,
> Schätzen (32) von Qualitätsangaben für die empfangenen Transportformate unter Berücksichtigung von Kanal- und Interferenzbedingungen,
> Übertragen (33) eines Qualitätsberichts für eines oder mehrere der empfangenen Transportformate einschließlich einer Qualitätsangabe für jedes der Formate.

**25.** Verfahren nach Anspruch 24, wonach ein mobiles Endgerät eine Qualitätsangabe aus einem Signal-Rausch- und Signal-Störsignal-Verhältnis bestimmt, wenn es die empfangenen Transportformate anwendet.

## Revendications

**1.** Procédé dans un point d'accès (11) d'un système de communication (10), ledit point d'accès (11) émettant des signaux des flux de données en utilisant un ensemble d'une ou de plusieurs antennes (A$_1$,... A$_M$) pour une pluralité de terminaux mobiles (MS$_1$,... MS$_k$), **caractérisé par**
la détermination (21) d'un ensemble de formats de transport spatial comprenant pour chaque format au moins un ou plusieurs vecteurs de pondérations et de retards d'émission complexe, chaque vecteur associé à l'émission d'un signal déterminé d'intérêt ou d'un nombre de signaux de co-canal multiplexés et associé à une valeur de puissance d'émission de son signal associé, de sorte que chaque élément de vecteur est associé à une antenne,
la sélection d'un sous-ensemble desdits formats de transport comme l'ensemble actif pour une émission de données à un ou plusieurs desdits terminaux mobiles,
la signalisation (23) dudit ensemble actif de formats de transport pour ledit un ou plusieurs terminaux mobiles.

**2.** Procédé selon la revendication 1, dans lequel la norme d'un vecteur représente la puissance d'émission du signal associé.

**3.** Procédé selon la revendication 1, dans lequel un facteur d'échelle d'un vecteur représente la puissance d'émission du signal associé.

**4.** Procédé selon l'une des revendications 1 à 3, dans lequel la signalisation (23) est réalisée sur un canal de commande commun qui peut être décodé par tous les utilisateurs dans la zone de couverture du point d'accès.

**5.** Procédé selon l'une des revendications 1 à 3, dans lequel la signalisation (23) est réalisée sur un canal de commande dédié qui est émis sur une partie de la zone de couverture du point d'accès à un utilisateur spécifique.

**6.** Procédé selon l'une des revendications précédentes, dans lequel les terminaux mobiles ou un groupe de terminaux mobiles sont assignés à différents ensembles de formats de transport.

**7.** Procédé selon l'une des revendications précédentes, comprenant l'étape d'avertissement des terminaux mobiles concernant une mesure à appliquer sur des propriétés de canal de liaison descendante sélectionnées pour dériver un indicateur de qualité pour un ou plusieurs des formats de transport.

**8.** Procédé selon la revendication 7, comprenant les étapes d'avertissement des terminaux mobiles de fournir des indicateurs de qualité pour le meilleur ou un ensemble de meilleurs formats de transport par rapport à la mesure appliquée.

**9.** Procédé selon la revendication 7 ou la revendication 8, comprenant les étapes d'avertissement des terminaux mobiles pour fournir des indicateurs de qualité pour le pire ou un ensemble de formats de transport pires par rapport à la mesure appliquée.

**10.** Procédé selon la revendication 7, dans lequel la mesure appliquée est un rapport signal sur bruit et interférence.

**11.** Procédé selon la revendication 7, dans lequel la mesure appliquée est une estimation du débit binaire supporté en termes de système de codage et de modulation de canal.

**12.** Procédé selon la revendication 1, dans lequel le nombre de pondérations pour chaque antenne est le même.

**13.** Procédé selon la revendication 12, dans lequel seulement une pondération complexe et un retard complexe sont assignés à chaque antenne spécifique.

**14.** Procédé selon la revendication 1, dans lequel une valeur de retard fixe est assignée à toutes les antennes.

**15.** Procédé selon la revendication 14, dans lequel la valeur de retard fixe n'est pas comprise dans la signalisation de l'ensemble actif des formats de transport.

**16.** Procédé selon la revendication 1, dans lequel le point d'accès réalise en outre les étapes de :

ajustement des formats de transport de l'ensemble actif au moyen de l'adaptation (29) des paramètres de leurs pondérations d'émission complexes et/ou leur puissance d'émission au moyen de l'évaluation (26) des informations de gestion de canal collectées (22),
signalisation (23) d'une indication des formats de transport ajustés à un ou plusieurs terminaux mobiles.

**17.** Procédé selon la revendication 16, dans lequel lesdites informations de gestion reçues (22) comprennent des indicateurs de qualité déterminés de terminal mobile des canaux descendants associés à leurs formats de transport.

**18.** Procédé selon la revendication 16 ou 17. dans lequel lesdites informations de gestion reçues (22) comprennent des exigences de gestion d'interférence et/ou indications de statistiques de canal de liaison descendante.

**19.** Procédé selon la revendication 16, dans lequel la sélection et l'ajustement desdits formats de transport optimisent le débit de données agrégées soumis à des exigences de qualité et d'équité.

**20.** Procédé selon la revendication 1, dans lequel le point d'accès réalise en outre les étapes de :

évaluation (26) d'une pluralité d'indicateurs de qualité reçus de divers terminaux mobiles et détermination (24) des débits de données applicables pour chacun des flux de données associés aux formats de transport d'un ensemble actif,
détermination (24) à partir de ladite évaluation d'un système d'ordonnancement et ordonnancement des flux de données auxdits terminaux mobiles,
assignation d'un débit de données applicable à chacun desdits flux de données ordonnancés.

**21.** Procédé selon la revendication 20, dans lequel ledit système d'ordonnancement fournit un accès équitable aux flux de données.

**22.** Procédé selon la revendication 20. dans lequel ledit système d'ordonnancement fournit un accès cyclique aux flux de données.

**23.** Procédé selon la revendication 20, dans lequel le système d'ordonnancement fournit seulement un accès aux flux de données si l'indicateur de qualité rapporté est suffisamment bon.

**24.** Procédé dans un terminal mobile ($MS_1$,..., $MS_k$) d'un système de communication (10), ledit terminal mobile comprenant une ou plusieurs antennes ($A_1$,.... $A_M$) pour recevoir des flux de données à partir d'un point d'accès multi-antenne (11), **caractérisé par**
la réception (31) à partir d'un point d'accès d'une indication des formats transport spatial applicables,
l'estimation (32) des indicateurs de qualité pour les formats de transport reçus prenant en compte des conditions de canal et d'interférence,
l'émission (33) d'un rapport de qualité pour un ou plusieurs des formats de transport reçus, comprenant un indicateur de qualité pour chacun desdits formats.

25. Procédé selon la revendication 24, dans lequel un terminal mobile détermine un indicateur de qualité à partir d'un rapport signal sur bruit et interférence lors de l'application des formats de transport reçus.

## Fig. 1

Fig. 2

```
┌─────────────────────────────┐
│    receive  indication  of  │ ⌒31
│ applicable  transport formats│
└─────────────────────────────┘
              │
              ▼
              ●◄──────────────────────┐
              │                        │
              ▼                        │
┌─────────────────────────────┐        │
│ estimating  quality indicators│ ⌒32  │
│  for  said  transport  formats│       │
└─────────────────────────────┘        │
              │                        │
              ▼                        │
┌─────────────────────────────┐        │
│ transmitting  quality report │ ⌒33   │
│    to  the  access  point    │        │
└─────────────────────────────┘        │
              │                        │
              └────────────────────────┘
```

# Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5886988 A

- US 5515378 A